(19) Europäisches Patentamt
European Patent Office
Office européen des brevets

(11) **EP 2 594 373 B1**

(12) **EUROPÄISCHE PATENTSCHRIFT**

(45) Veröffentlichungstag und Bekanntmachung des Hinweises auf die Patenterteilung:
**25.06.2014 Patentblatt 2014/26**

(51) Int Cl.:
*G06F 3/033* (2013.01)     *B25J 9/16* (2006.01)
*G05B 19/4061* (2006.01)

(21) Anmeldenummer: **11189290.7**

(22) Anmeldetag: **16.11.2011**

(54) **Festlegen von zulässigem Verfahrbereich mittels eines Zeigers**

Determining the permitted traversing range using a pointer

Détermination d'une zone de déplacement autorisée au moyen d'un indicateur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.05.2013 Patentblatt 2013/21**

(73) Patentinhaber: **Siemens Aktiengesellschaft**
**80333 München (DE)**

(72) Erfinder: **Hamm, Carsten**
**91058 Erlangen (DE)**

(56) Entgegenhaltungen:
DE-A1- 3 406 212     DE-U1- 29 707 922
GB-A- 2 285 550     US-A1- 2009 143 912

• **SONDERMANN J P ET AL: "NEUE WEGE IN DER KOORDINATENMESSTECHNIK. \MOBILE 3 D-MESSSYSTEME IM INDUSTRIELLEN UMFELD", ZWF ZEITSCHRIFT FUR WIRTSCHAFTLICHE FERTIGUNG UNDAUTOMATISIERUNG, CARL HANSER VERLAG. MUNCHEN, DE, Bd. 85, Nr. 4, 1. April 1990 (1990-04-01), Seiten 210-215, XP000148484, ISSN: 0947-0085**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Betriebsverfahren für eine Bearbeitungsmaschine.

Die vorliegende Erfindung betrifft weiterhin ein Computerprogramm, das Maschinencode umfasst, der von einer Steuereinrichtung einer Bearbeitungsmaschine unmittelbar abarbeitbar ist.

Die vorliegende Erfindung betrifft weiterhin eine Steuereinrichtung einer Bearbeitungsmaschine, die mit einem derartigen Computerprogramm programmiert ist.

Zur automatisierten Fertigung von Werkstücken kommen Bearbeitungsmaschinen wie beispielsweise numerisch gesteuerte Werkzeugmaschinen zum Einsatz. Der durch die Kinematik der jeweiligen Maschine prinzipiell erreichbare Arbeitsraum (im Wesentlichen der Verfahrbereich der Achsen) ist im Regelfall durch erforderliche maschinenbauliche Komponenten wie beispielsweise Abdeckungen, Spannmittel usw. eingeschränkt. Die Beschränkung der Bewegungsfreiheit muss der Steuereinrichtung der Bearbeitungsmaschine in geeigneter Form bekannt gemacht werden, um mögliche Prozessstörungen wie beispielsweise eine Kollision der Werkzeugspindel mit einer Spannvorrichtung zu vermeiden.

Es sind verschiedene Verfahren zum Kollisionsschutz bekannt und im Einsatz. Das Dokument US 2009/0143912 A1 zeigt eines davon.

Mechanisch oder sensorisch wirkende Methoden sind zwar einfach zu realisieren, haben aber den Nachteil, dass sie erst bei Eintritt einer Kollision reagieren. Demgegenüber ist es bei steuerungsgestützten Lösungen möglich, eine drohende Kollision vorab zu erkennen und die Kollision zu verhindern.

Bei Fertigung in großen Stückzahlen und mit hohem Automatisierungsgrad lohnt es sich, im Rahmen der Arbeitsvorbereitung ein vollständiges Geometriemodell der Bearbeitungsmaschine zu erstellen und die Bearbeitung zu simulieren. Bei einer Fertigung von kleineren Stückzahlen oder bei einer häufigeren manuellen Umrüstung der Maschinen ist dies jedoch ein rein händischer Vorgang. Die Aufspannsituation und die weiteren kollisionsgefährdeten Bereiche sind vom Anwender der Bearbeitungsmaschine zu prüfen und in der Steuerung zu parametrieren. Dies kann beispielsweise durch die Eingabe von Koordinaten für Software-Endschalter in eine Tabelle erfolgen.

Weiterhin sind teilautomatisierte Verfahren bekannt, bei denen der Arbeitsraum mittels optischer Sensoren erfasst und in ein Datenmodell überführt wird. Für derartige Verfahren werden beispielsweise Laserscanner und/oder Bilderkennungssysteme verwendet. Nachteilig bei dieser Vorgehensweise sind die hohen Kosten für Laser, Kamera usw. sowie die extrem rechenintensive und in manchen Fällen nicht zuverlässige Auswertung der optisch erfassten Daten.

Aus der GB 2 285 550 A ist ein Vermessungsverfahren für ein Werkstück bekannt. Im Rahmen des Vermessungsverfahrens wird ein Zeiger, der eine Anzahl an ersten Ortsbestimmungseinrichtungen aufweist, die bezüglich eines auf den Zeiger bezogenen Zeigerkoordinatensystems an vorbestimmten Zeigerorten angeordnet sind, von einem Anwender nacheinander an eine Anzahl von Orten eines Arbeitsraums geführt. Eine Anzahl an zweiten Ortsbestimmungseinrichtungen ist bezüglich eines auf die Bearbeitungsmaschine bezogenen Maschinenkoordinatensystems an vorbestimmten Maschinenorten angeordnet. Durch Zusammenwirken der ersten Ortsbestimmungseinrichtungen mit den zweiten Ortsbestimmungseinrichtungen werden jeweils zumindest für eine geometrische Beziehung der ersten Ortsbestimmungseinrichtungen relativ zu den zweiten Ortsbestimmungseinrichtungen charakteristische Daten erfasst und an einen Rechner übermittelt. Der Rechner ermittelt anhand der übermittelten charakteristischen Daten, der vorbestimmten Zeigerorte und der vorbestimmten Maschinenorte jeweils die Position des Zeigers im Arbeitsraum.

Die Aufgabe der vorliegenden Erfindung besteht darin, Möglichkeiten zu schaffen, mittels derer auf einfache und intuitive Weise eine Unterteilung des Verfahrbereichs in einen zulässigen und einen verbotenen Verfahrbereich möglich ist.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 13.

Erfindungsgemäß ist vorgesehen, ein Betriebsverfahren der eingangs genannten Art dadurch auszugestalten,

- dass ein Zeiger eine Anzahl an ersten Ortsbestimmungseinrichtungen aufweist, die bezüglich eines auf den Zeiger bezogenen Zeigerkoordinatensystems an vorbestimmten Zeigerorten angeordnet sind,
- dass eine Anzahl an zweiten Ortsbestimmungseinrichtungen bezüglich eines auf die Bearbeitungsmaschine bezogenen Maschinenkoordinatensystems an vorbestimmten Maschinenorten angeordnet ist,
- dass in einem Normalbetrieb eine Steuereinrichtung der Bearbeitungsmaschine zum Bearbeiten eines Werstücks eine verfahrbare Komponente der Bearbeitungsmaschine innerhalb eines für die verfahrbare Komponente zulässigen Verfahrbereichs, nicht aber innerhalb eines für die verfahrbare Komponente verbotenen Verfahrbereichs verfährt,
- dass der zulässige Verfahrbereich und der verbotene Verfahrbereich zueinander komplementär sind und zusammen einen Arbeitsraum bilden, innerhalb dessen die verfahrbare Komponente verfahrbar ist,
- dassin einem Vorgabebetrieb

-- ein Zeiger von einem Anwender nacheinander an eine Anzahl von Orten des Arbeitsraums der Bearbeitungsmaschine geführt wird,

-- durch Zusammenwirken der ersten Ortsbestimmungseinrichtungen mit den zweiten Ortsbestimmungseinrichtungen jeweils zumindest für eine geometrische Beziehung der ersten Ortsbestimmungseinrichtungen relativ zu den zweiten Ortsbestimmungseinrichtungen charakteristische Daten erfasst und an die Steuereinrichtung übermittelt werden,

-- die Steuereinrichtung anhand der übermittelten charakteristischen Daten, der vorbestimmten Zeigerorte und der vorbestimmten Maschinenorte jeweils die Position des Zeigers im Arbeitsraum ermittelt und

-- die Steuereinrichtung die ermittelten Positionen des Zeigers im Rahmen einer Unterteilung des Arbeitsraums der Bearbeitungsmaschine in den zulässigen und den verbotenen Verfahrbereich berücksichtigt.

Die vorliegende Erfindung adressiert damit insbesondere das zentrale Problem, wie der Steuereinrichtung die entsprechenden Positionen, anhand derer sie die Unterteilung des Verfahrbereichs vornimmt, bekannt gemacht werden können.

Ein Zeiger im Sinne der vorliegenden Erfindung ist nicht ein datentechnisches Konstrukt, mittels dessen auf ein bestimmtes Datenelement in einem Speicher einer Datenverarbeitungseinrichtung verwiesen wird. Vielmehr ist ein Zeiger im Sinne der vorliegenden Erfindung ein mechanisches Element, das vom Anwender geometrisch von Ort zu Ort bewegt wird. Beispielsweise kann es sich um einen Zeigestab handeln, der eine entsprechende Zeigerspitze aufweist.

Die Anzahl an ersten und zweiten Ortsbestimmungseinrichtungen kann nach Bedarf gewählt sein. Es ist möglich, dass nur eine einzige erste Ortsbestimmungseinrichtung vorhanden ist. In diesem Fall müssen in der Regel mehrere zweite Ortsbestimmungseinrichtungen vorhanden sein, um anhand der geometrischen Beziehungen die Position des Zeigers im Arbeitsraum ermitteln zu können. Beispielsweise können vier oder mehr zweite Ortsbestimmungseinrichtungen vorhanden sein. Wenn andererseits die Anzahl an ersten Ortsbestimmungseinrichtungen erhöht wird, beispielsweise auf zwei, drei oder vier, kann umgekehrt die Anzahl an zweiten Ortsbestimmungseinrichtungen reduziert werden oder aber die zusätzlich zur Verfügung stehende Information zur Ermittlung auch der Orientierung des Zeigers im Arbeitsraum genutzt werden. Unabhängig von der Anzahl an ersten Ortsbestimmungseinrichtungen sollten vorzugsweise jedoch in der Regel mehrere zweite Ortsbestimmungseinrichtungen vorhanden sein, beispielsweise zwei oder drei zweite Ortsbestimmungseinrichtungen.

Soweit nachfolgend nicht ausdrücklich darauf hingewiesen wird, dass mehrere erste und/oder mehrere zweite Ortsbestimmungseinrichtungen vorhanden sind, dient die Verwendung des Plurals nur der Erläuterung des von der jeweiligen Anzahl an Ortsbestimmungseinrichtungen losgelösten Sachverhalts, nicht der Festlegung auf mehrere erste und/oder zweite Ortsbestimmungseinrichtungen. Analoges gilt für die später noch einzuführenden Sender, Empfänger, Reflektoren und Transponder.

Die Auswertung der erfassten geometrischen Beziehungen gestaltet sich besonders einfach, wenn die charakteristischen Daten jeweils für die Abstände der ersten Ortsbestimmungseinrichtungen von den zweiten Ortsbestimmungseinrichtungen charakteristisch sind.

Es ist möglich, dass die ersten oder die zweiten Ortsbestimmungseinrichtungen jeweils ein Signal aussenden, dass die jeweils anderen Ortsbestimmungseinrichtungen die ausgesendeten Signale empfangen und dass die jeweils anderen Ortsbestimmungseinrichtungen die charakteristischen Daten an die Steuereinrichtung übermitteln.

Es ist auch möglich, dass die ersten oder die zweiten Ortsbestimmungseinrichtungen jeweils ein Signal aussenden, dass die jeweils anderen Ortsbestimmungseinrichtungen die ausgesendeten Signale reflektieren oder in modifizierter Form wieder emittieren, dass die ersten oder die zweiten Ortsbestimmungseinrichtungen die reflektierten oder in modifizierter Form wieder emittierten Signale empfangen und die charakteristischen Daten an die Steuereinrichtung übermitteln. In diesem Fall können die ersten Ortsbestimmungseinrichtungen als kombinierte Sende-Empfänger ausgebildet sein, die mit der Steuereinrichtung zur Übermittlung der charakteristischen Daten datentechnisch verbunden sind. In diesem Fall sind die zweiten Ortsbestimmungseinrichtungen als Reflektoren oder als Transponder ausgebildet. Auch die umgekehrte Ausgestaltung, dass also die zweiten Ortsbestimmungseinrichtungen als kombinierte Sende-Empfänger ausgebildet sind und die ersten Ortsbestimmungseinrichtungen als Reflektoren oder als Transponder ausgebildet sind, ist möglich.

Ein Sende-Empfänger ist eine Einrichtung, die - entsprechend ihrem Namen - sowohl eine Senderfunktionalität als auch eine Empfängerfunktionalität umfasst. Reflektoren sind Einrichtungen, die ein Sendesignal ohne weitergehende Modifizierung reflektieren. Transponder sind Einrichtungen, die aufgrund des empfangenen Signals ein modifiziertes Signal abstrahlen. Die Modifikation kann in einer Frequenzumsetzung und/oder in einer Modulation des entsprechenden Signals bestehen. Beispielsweise kann das von einem Transponder wieder emittierte Signal mit einer transponderspezifischen Kennung moduliert sein.

Soweit nachfolgend von Sendern die Rede ist, sind hiermit, sofern dies sinnvoll ist, nicht nur die reinen Sender gemeint, sondern auch die Sende-Empfänger. Soweit nachfolgend von Empfängern die Rede ist, sind hiermit, sofern dies sinnvoll ist, nicht nur die reinen Empfänger gemeint, sondern auch die Sende-Empfänger.

Die Auswertung der charakteristischen Daten gestaltet sich besonders einfach, wenn zumindest die Empfänger die von ihnen empfangenen Signale mit einem Zeitstempel versehen, also die Empfangszeitpunkte registrieren. Wenn beispielsweise Sender und Empfänger getrennte Einrichtungen sind und die Sender von ihnen ausgesendete Signale mit einem für die Sendezeit charakteristischen Zeitstempel versehen, ist anhand des jeweiligen Sendezeitpunkts und des jeweiligen Empfangszeitpunkts direkt die Laufzeit bekannt, so dass in Verbindung mit der bekannten Ausbreitungsgeschwindigkeit des gesendeten Signals auch der Abstand der jeweiligen ersten von der jeweiligen zweiten Ortsbestimmungseinrichtung bekannt ist. Wenn hingegen nur die Empfänger die von ihnen empfangenen Signale mit einem Zeitstempel versehen, müssen die Empfangszeitpunkte um einen Offset (= Sendezeitpunkt) korrigiert werden. Der Offset kann ermittelt werden, wenn für den jeweiligen Sendezeitpunkt hinreichend viele Empfangszeitpunkte bekannt sind.

Wie bereits erwähnt, ist es möglich, dass mehrere Sender vorhanden sind. In diesem Fall ist vorzugsweise vorgesehen, dass die Sendesignale eine den jeweiligen Sender individualisierende jeweilige Senderkennung umfassen und/oder die Sender ihre Sendesignale simultan auf verschiedenen Frequenzen oder im Zeitmultiplex abstrahlen.

In einer bevorzugten Ausgestaltung der vorliegenden Erfindung ist vorgesehen, dass die charakteristischen Daten von den Empfängern leitungslos an die Steuereinrichtung übermittelt werden.

Vorzugsweise sind die von den Sendern abgestrahlten Signale akustische Signale, insbesondere Ultraschallsignale. Denn insbesondere sind aufgrund der im Vergleich zu elektromagnetischen Wellen relativ niedrigen Ausbreitungsgeschwindigkeit von akustischen Signalen die geometrischen Beziehungen mit erheblich geringerem Aufwand mit hoher Genauigkeit ermittelbar.

In manchen Ausgestaltungen der vorliegenden Erfindung kann es von Vorteil sein, wenn die Steuereinrichtung anhand der übermittelten charakteristischen Daten, der vorbestimmten Zeigerorte und der vorbestimmten Maschinenorte zusätzlich zur Position des Zeigers im Arbeitsraum auch die Orientierung des Zeigers im Arbeitsraum ermittelt. In diesem Fall sind in der Regel im Vergleich zu dem Fall, dass ausschließlich die Position des Zeigers ermittelt wird, mehr erste und zweite Ortsbestimmungseinrichtungen erforderlich.

In einer bevorzugten Ausgestaltung der vorliegenden Erfindung ist vorgesehen, dass der Zeiger einen Griffbereich aufweist und dass im Griffbereich ein Auslöseelement angeordnet ist, dessen Betätigung durch den Anwender die Erfassung der charakteristischen Daten und/oder die Übermittlung der charakteristischen Daten an die Steuereinrichtung und/oder die Ermittlung der Position des Zeigers im Arbeitsraum auslöst. Beispielsweise kann das Betätigen des Auslöseelements den Betrieb der ersten Ortsbestimmungseinrichtungen auslösen, so dass die ersten Ortsbestimmungseinrichtungen nur in diesem Zustand als Sender und/oder als Empfänger wirken oder - im Falle der Ausgestaltung als Transponder - nur in diesem Fall das entsprechend modulierte Signal aussenden. Auch ist es möglich, dass das Betätigen des Auslöseelements - leitungsgebunden oder leitungslos - an die zweiten Ortsbestimmungseinrichtungen übermittelt wird und dort die entsprechende Reaktion auslöst. Auch ist es möglich, dass erst das Betätigen des Auslöseelements die Übermittlung der charakteristischen Daten an die Steuereinrichtung auslöst. Auch ist es möglich, dass das Betätigen des Auslöseelements - leitungslos oder leitungsgebunden - direkt an die Steuereinrichtung übermittelt wird und dort das Übernehmen der charakteristischen Daten und/oder das Ermitteln der Position des Zeigers auslöst.

Vorzugsweise ist vorgesehen, dass ermittelte Positionen des Zeigers vom Anwender selektierbar sind, dass der Steuereinrichtung vom Anwender ein Gruppierungsbefehl vorgebbar ist, dass die Steuereinrichtung die selektierten Positionen des Zeigers aufgrund des Gruppierungsbefehls zu einer jeweiligen Positionsgruppe zusammenfasst und dass die Steuereinrichtung die Unterteilung des Arbeitsraums in den zulässigen und den verbotenen Verfahrbereich unter Verwendung der jeweiligen Positionsgruppe als solcher vornimmt.

In einer besonders bevorzugten Ausgestaltung der vorliegenden Erfindung ist vorgesehen, dass die Steuereinrichtung anhand der jeweiligen Positionsgruppe eine gültige Objektkontur ermittelt und dass die Steuereinrichtung die ermittelte gültige Objektkontur als einheitlichen Bestandteil des für die verfahrbare Komponente verbotenen Verfahrbereichs klassifiziert. Beispielsweise kann zu diesem Zweck vorgesehen sein, dass die Steuereinrichtung anhand der jeweiligen Positionsgruppe eine vorläufige Objektkontur ermittelt, die vorläufige Objektkontur mit vordefinierten möglichen Objektkonturen vergleicht und die gültige Objektkontur anhand des Vergleichs der vorläufigen Objektkontur mit den vordefinierten möglichen Objektkonturen ermittelt.

Die Aufgabe wird weiterhin durch ein Computerprogramm gemäß Anspruch 14 gelöst. Das Computerprogramm ist in diesem Fall derart ausgestaltet,

- dass die Abarbeitung des Maschinencodes durch die Steuereinrichtung bewirkt, dass die Steuereinrichtung in einem Normalbetrieb zum Bearbeiten eines Werkstücks eine verfahrbare Komponente der Bearbeitungsmaschine innerhalb eines für die verfahrbare Komponente zulässigen Verfahrbereichs, nicht aber innerhalb eines für die verfahrbare Komponente verbotenen Verfahrbereichs verfährt, wobei der zulässige Verfahrbereich und der verbotene Verfahrbereich zueinander komplementär sind und zusammen einen Arbeitsraum bilden, innerhalb dessen die verfahrbare Komponente verfahrbar ist,

- dass die Abarbeitung des Maschinencodes durch die Steuereinrichtung weiterhin bewirkt, dass die Steuereinrichtung in einem Vorgabebetrieb

-- für eine Anzahl von Orten des Arbeitsraums der Bearbeitungsmaschine, an die ein Zeiger von einem Anwender nacheinander geführt wird, jeweils eine Anzahl von durch Zusammenwirken einer Anzahl erster Ortsbestimmungseinrichtungen mit einer Anzahl zweiter Ortsbestimmungseinrichtungen erfasste, für eine geometrische Beziehung der ersten Ortsbestimmungseinrichtungen relativ zu den zweiten Ortsbestimmungseinrichtungen charakteristische Daten entgegen nimmt, wobei die ersten Ortsbestimmungseinrichtungen bezüglich eines auf den Zeiger bezogenen Zeigerkoordinatensystems an vorbestimmten Zeigerorten angeordnet sind und die zweiten Ortsbestimmungseinrichtungen bezüglich eines auf die Bearbeitungsmaschine bezogenen Maschinenkoordinatensystems an vorbestimmten Maschinenorten angeordnet sind,

-- anhand der entgegen genommenen charakteristischen Daten , der vorbestimmten Zeigerorte und der vorbestimmten Maschinenorte jeweils die Position des Zeigers im Arbeitsraum ermittelt und

-- die ermittelten Positionen des Zeigers im Rahmen einer Unterteilung des Arbeitsraums der Bearbeitungsmaschine in den zulässigen und den verbotenen Verfahrbereich berücksichtigt.

Die Aufgabe wird weiterhin durch eine Steuereinrichtung einer Bearbeitungsmaschine gelöst, die mit einem erfindungsgemäßen Computerprogramm programmiert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung

| | |
|---|---|
| FIG 1 | den Aufbau einer Bearbeitungsmaschine, |
| FIG 2 und 3 | Ablaufdiagramme, |
| FIG 4 | beispielhaft eine Anordnung von ersten und zweiten Ortsbestimmungseinrichtungen, |
| FIG 5 | einen möglichen Meldungsaufbau, |
| FIG 6 | ein mögliches Sendesignal, |
| FIG 7 | eine mögliche Senderanordnung, |
| FIG 8 | ein Zeitdiagramm, |
| FIG 9 | einen Zeiger und |
| FIG 10 bis 12 | Ablaufdiagramme. |

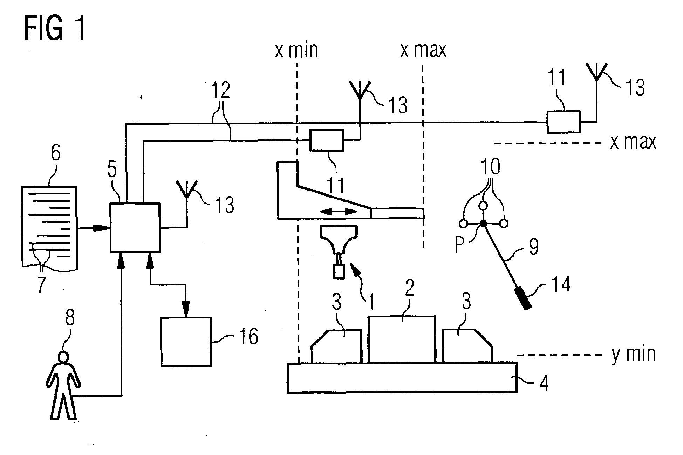

Gemäß FIG 1 weist eine Bearbeitungsmaschine eine verfahrbare Komponente 1 auf. Die Komponente 1 kann beispielsweise ein Werkzeug sein, mittels dessen ein Werkstück 2 bearbeitet werden soll. Das Werkstück 2 wird während der Bearbeitung durch das Werkzeug 1 mittels Spannelementen 3 an einem Werkstückhalter 4 verspannt. Das Werkzeug 1 ist beispielsweise mittels eines ersten Antriebs (nicht dargestellt) in einer ersten Richtung - nachfolgend als x-Richtung bezeichnet - zwischen zwei Grenzpositionen xmin, xmax verfahrbar. Mittels eines weiteren Antriebs (ebenfalls nicht dargestellt) kann das Werkzeug 1 beispielsweise in einer zur x-Richtung orthogonalen Richtung - nachfolgend als y-Richtung bezeichnet - zwischen zwei weiteren Grenzpositionen ymin, ymax verfahrbar sein. Auch andere Verfahrmöglichkeiten - sei es alternativ, sei es zusätzlich zu den obenstehend erläuterten Verfahrmöglichkeiten - sind denkbar. Beispielsweise sind (alternativ oder zusätzlich zu den obenstehend erläuterten translatorischen Bewegungen) eine weitere translatorische Bewegung in einer weiteren Richtung oder Drehbewegungen möglich. Gegebenenfalls können sogar - wie beispielsweise bei Roboterarmen - aufeinander aufbauende, gekoppelte Bewegungen möglich sein.

Unabhängig von den konkret realisierten Verfahrmöglichkeiten ist die verfahrbare Komponente 1 innerhalb eines vorbestimmten Arbeitsraums der Bearbeitungsmaschine verfahrbar, gemäß dem Beispiel von FIG 1 innerhalb des durch die Grenzpositionen xmin, xmax, ymin, ymax definierten Rechtecks.

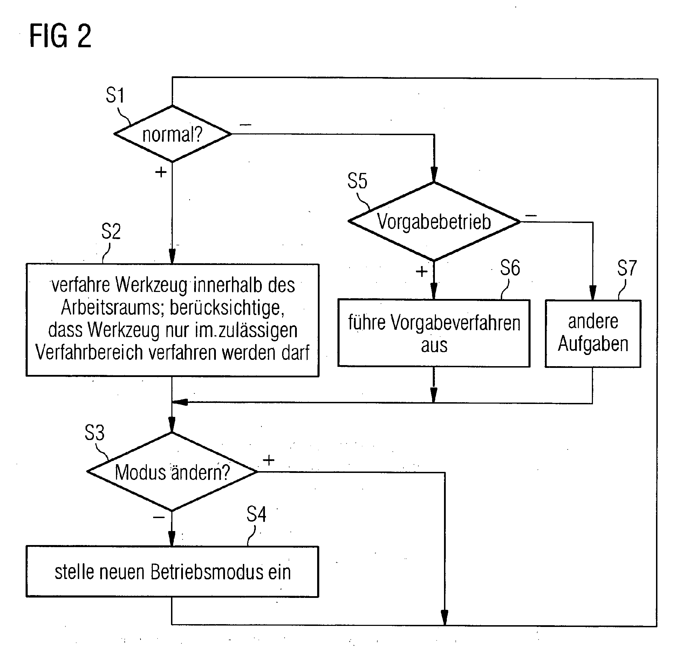

Die Antriebe werden von einer Steuereinrichtung 5 gesteuert. Die verfahrbare Komponente 1 ist daher von der Steuereinrichtung 5 innerhalb des Arbeitsraums der Bearbeitungsmaschine verfahrbar. Die Steuereinrichtung 5 ist mit einem Computerprogramm 6 programmiert. Das Computerprogramm 6 umfasst Maschinencode 7, der von der Steuereinrichtung 5 unmittelbar abarbeitbar ist. Das Abarbeiten des Maschinencodes 7 durch die Steuereinrichtung 5 bewirkt, dass die Steuereinrichtung 5 ein Betriebsverfahren ausführt, das nachfolgend in Verbindung mit FIG 2 näher erläutert wird.

In einem Schritt S1 prüft die Steuereinrichtung 5, ob sie sich in einem Normalbetrieb befindet. Wenn dies der Fall ist, führt die Steuereinrichtung in einem Schritt S2 den Normalbetrieb aus. Im Normalbetrieb erfolgt insbesondere die Bearbeitung des Werkstückes 2 durch das Werkzeug 1. Hierbei wird von der Steuereinrichtung 5 unter anderem das Werkzeug 1 (= die verfahrbare Komponente 1) innerhalb des Arbeitsraums verfahren. Die Steuereinrichtung 5 berücksichtigt beim Verfahren des Werkzeugs 1, dass das Werkzeug 1 nur in einem Teilbereich (= zulässiger Verfahrbereich) des Arbeitsraums verfahren werden darf. Der übrige Teil des Arbeitsraums stellt einen für die verfahrbare Komponente 1 verbotenen Verfahrbereich dar. Der Arbeitsraum ist im Rahmen der Ausführung des Schrittes S2 also in einen für die verfahrbare Komponente 1 zulässigen Verfahrbereich und einen dazu komplementären verbotenen Verfahrbereich unterteilt.

In einem Schritt S3 prüft die Steuereinrichtung 5, ob der Betriebsmode geändert werden soll. Der Schritt S3 kann insbesondere umfassen, ob eine entsprechende Eingabe eines Anwenders 8 erfolgt ist. Wenn der Betriebsmode nicht geändert werden soll, überspringt die Steuereinrichtung 5 einen Schritt S4. Anderenfalls stellt die Steuereinrichtung 5 - beispielsweise aufgrund einer entsprechenden Vorgabe des Betriebsmodus durch den Anwender 8 - im Schritt S4 den neuen Betriebsmodus ein. Sodann geht sie zum Schritt S1 zurück.

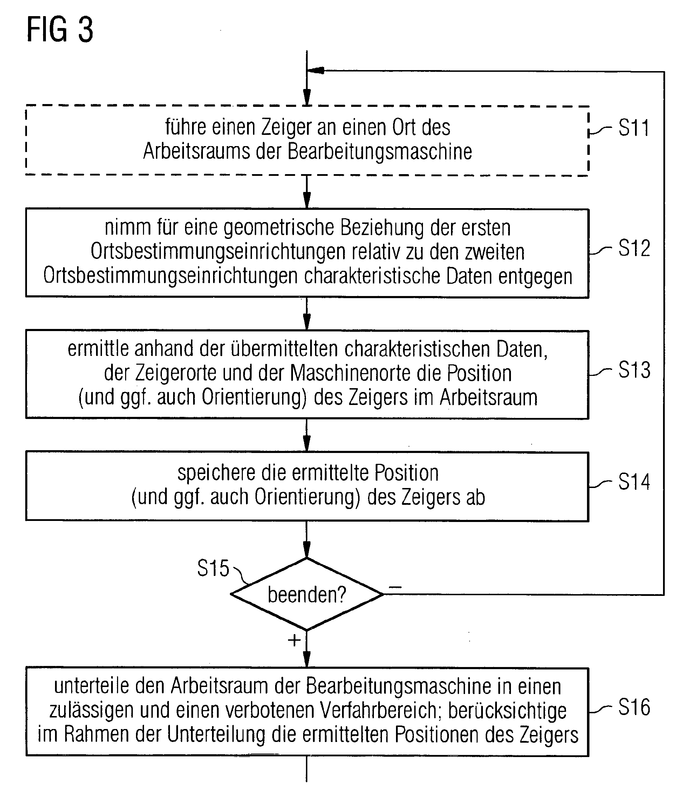

Wenn im Rahmen der Abarbeitung des Schrittes S1 der vorgegebene Betriebsmode nicht der Normalbetrieb ist, geht die Steuereinrichtung 5 zu einem Schritt S5 über. Im Schritt S5 prüft die Steuereinrichtung 5, ob der eingestellte Betriebsmodus ein Vorgabebetrieb ist. Wenn dies der Fall ist, führt die Steuereinrichtung 5 in einem Schritt S6 ein Vorgabeverfahren aus, das nachfolgend in Verbindung mit FIG 3 näher erläutert wird. Sodann geht sie zum Schritt S3 über.

Falls der vorgegebene Betriebsmodus weder der Normalbetrieb noch der Vorgabebetrieb ist, geht die Steuereinrichtung 5 zu einem Schritt S7 über, in dem sie andere Aufgaben ausführt.

FIG 3 zeigt eine mögliche Ausgestaltung des Schrittes S6 von FIG 2.

Gemäß FIG 3 wird in einem Schritt S11 ein Zeiger 9 (siehe FIG 1) an einen Ort des Arbeitsraums der Bearbeitungsmaschine geführt. Der Schritt S11 wird nicht von der Steuereinrichtung 5 ausgeführt, sondern vom Anwender 8 der Bearbeitungsmaschine. Der Schritt S11 ist also nicht Bestandteil des von der Steuereinrichtung 5 ausgeführten Verfahrens. Aus diesem Grund ist der Schritt S11 in FIG 3 nur gestrichelt eingezeichnet. Der Schritt S11 ist jedoch wesentlich für das Verständnis der vorliegenden Erfindung und aus diesem Grund in FIG 3 mit dargestellt.

Der Zeiger 9 weist gemäß FIG 1 eine Anzahl an ersten Ortsbestimmungseinrichtungen 10 auf. Minimal ist eine einzige erste Ortsbestimmungseinrichtung 10 vorhanden. Dargestellt in FIG 3 ist ein Zeiger 9 mit drei ersten Ortsbestimmungseinrichtungen 10. Die ersten Ortsbestimmungseinrichtungen 10 sind bezüglich eines auf den Zeiger 9 bezogenen (also zusammen mit dem Zeiger 9 bewegten) Zeigerkoordinatensystems an vorbestimmten Orten angeordnet, nachfolgend als Zeigerorte bezeichnet. Im Falle einer einzigen ersten Ortsbestimmungseinrichtung 10 entspricht der Ort dieser ersten Ortsbestimmungseinrichtung 10 dem Ursprung des Zeigerkoordinatensystems.

Die ersten Ortsbestimmungseinrichtungen 10 können als Sender oder als Empfänger ausgebildet sein. Weiterhin können sie auch beide Funktionalitäten umfassen, also als Sender und als Empfänger (= Sende-Empfänger) ausgebildet sein. Auch können die ersten Ortsbestimmungseinrichtungen 10 als (rein passive) Reflektoren oder als Transponder ausgebildet sein, d. h. dass sie ein Signal, mit dem sie bestrahlt werden, in modifizierter Form wieder emittieren.

Die ersten Ortsbestimmungseinrichtungen 10 wirken mit zweiten Ortsbestimmungseinrichtungen 11 zusammen. Die zweiten Ortsbestimmungseinrichtungen 11 sind bezüglich der Funktionalität komplementär zu den ersten Ortsbestimmungseinrichtungen 10. Wenn also die ersten Ortsbestimmungseinrichtungen 10 als Sender ausgebildet sind, sind die zweiten Ortsbestimmungseinrichtungen 11 als Empfänger ausgebildet. Wenn die ersten Ortsbestimmungseinrichtungen 10 als Empfänger ausgebildet sind, sind die zweiten Ortsbestimmungseinrichtungen 11 als Sender ausgebildet. Wenn die ersten Ortsbestimmungseinrichtungen 10 als Sende-Empfänger ausgebildet sind, sind die zweiten Ortsbestimmungseinrichtungen 11 als Reflektoren oder als Transponder ausgebildet. Wenn die ersten Ortsbestimmungseinrichtungen 10 als Reflektoren oder als Transponder ausgebildet sind, sind die zweiten Ortsbestimmungseinrichtungen 11 als Sende-Empfänger ausgebildet.

Die zweiten Ortsbestimmungseinrichtungen 11 sind bezüglich eines auf die Bearbeitungsmaschine bezogenen Maschinenkoordinatensystems, also eines in Bezug auf die Bearbeitungsmaschine ortsfesten Koordinatensystems, an vorbestimmten Orten angeordnet, nachfolgend als Maschinenorte bezeichnet. Die Anzahl an zweiten Ortsbestimmungseinrichtungen 11 ist in Grenzen frei wählbar. Dargestellt sind in FIG 1 - rein beispielhaft - zwei zweite Ortsbestimmungseinrichtungen 11. In der Regel sind mindestens drei zweite Ortsbestimmungseinrichtungen 11 vorhanden. In Einzelfällen kann die Anzahl jedoch geringer sein. Die Summe an ersten und zweiten Ortsbestimmungseinrichtungen 10, 11 beträgt in der Regel mindestens fünf.

Durch das Zusammenwirken der ersten und zweiten Ortsbestimmungseinrichtungen 10, 11 sind jeweils Daten erfassbar, die für eine geometrische Beziehung der ersten Ortsbestimmungseinrichtungen 10 relativ zu den zweiten Ortsbestimmungseinrichtungen 11 charakteristisch sind. Insbesondere kann für jedes Paar von ersten und zweiten Ortsbestimmungseinrichtungen 10, 11 der Zeitpunkt erfasst werden, zu dem ein von dem entsprechenden Sender ausgesendetes Signal von dem entsprechenden Empfänger empfangen wird. Unter Umständen kann sogar die Laufzeit selbst erfasst werden oder können sowohl der Sendezeitpunkt als auch der Empfangszeitpunkt erfasst werden, so dass die Laufzeit durch Differenzbildung direkt ermittelt werden kann. In Verbindung mit der bekannten Ausbreitungsgeschwindigkeit v des ausgesendeten Signals ist daher der geometrische Abstand der jeweiligen ersten Ortsbestimmungseinrichtung 10 von der jeweiligen zweiten Ortsbestimmungseinrichtung 11 ermittelbar. Sofern hinreichend viele Paare von ersten und zweiten Ortsbestimmungseinrichtungen 10, 11 vorhanden sind, kann daher der Ort des Ursprungs des Zeigerkoordinatensystems innerhalb des Arbeitsraums (d. h. die Position des Zeigers 9) ermittelt werden.

Die entsprechenden charakteristischen Daten werden von den Empfängern - unabhängig davon, ob die Empfänger in den ersten oder den zweiten Ortsbestimmungseinrichtungen 10, 11 angeordnet sind - an die Steuereinrichtung 5 übermittelt. Die Empfänger sind zu diesem Zweck datentechnisch mit der Steuereinrichtung 5 verbunden. Beispielsweise können entsprechende Verbindungsleitungen 12 vorhanden sein. Vorzugsweise besteht, wie in FIG 1 durch entsprechende Antennen 13 angedeutet ist, eine leitungslose Verbindung.

Die Steuereinrichtung 5 nimmt die charakteristischen Daten in einem Schritt S12 entgegen. In einem Schritt S13 ermittelt die Steuereinrichtung 5 anhand der übermittelten charakteristischen Daten, der Zeigerorte und der Maschinenorte die Position P des Zeigers 9 im Arbeitsraum. Gegebenenfalls kann die Steuereinrichtung 5 im Rahmen des Schrittes S13 zusätzlich zur Position P des Zeigers 9 im Arbeitsraum auch dessen Orientierung ermitteln. In diesem Fall sollten in der Regel mindestens drei erste Ortsbestimmungseinrichtungen 10 vorhanden sein. Die ermittelte Position P (und ggf. auch Orientierung) des Zeigers 9 speichert die Steuereinrichtung 5 in einem Schritt S14 ab.

Die Maschinenorte und die Zeigerorte müssen der Steuereinrichtung 5 selbstverständlich zuvor in geeigneter Weise bekannt gemacht werden. Hierzu kann beispielsweise eine entsprechende Eingabe des Anwenders 8 erforderlich sein. Alternativ ist es möglich, dass die entsprechenden Angaben bereits im Computerprogramm 6 festgelegt sind.

In einem Schritt S15 prüft die Steuereinrichtung 5, ob die Vorgabe der Positionen P des Zeigers 9 beendet werden soll. Wenn dies nicht der Fall ist, wird zum Schritt S11 zurückgegangen, die Sequenz der Schritte S11 bis S14 also erneut ausgeführt.

Wenn die Vorgabe von Positionen P des Zeigers 9 beendet werden soll, geht die Steuereinrichtung 5 zu einem Schritt S16 über. Im Schritt S16 unterteilt die Steuereinrichtung 5 den Arbeitsraum der Bearbeitungsmaschine in den zulässigen und den verbotenen Verfahrbereich. Im Rahmen der Unterteilung des Arbeitsraums berücksichtigt die Steuereinrichtung 5 die im Rahmen der (meist wiederholten) Ausführung der Schritte S11 bis S14 ermittelten Positionen P des Zeigers 9. Der Schritt S16 kann insbesondere interaktiv im Zusammenwirken mit dem Anwender 8 realisiert sein. Beispielsweise kann eine perspektivische oder andere Darstellung des Arbeitsraums, in der die Positionen P angezeigt sind, über ein Display an den Anwender 8 ausgegeben werden und können vom Anwender 8 Eingaben entgegen genommen werden.

Mittels des obenstehend in Verbindung mit den FIG 1 bis 3 - insbesondere FIG 3 - erläuterten Vorgabeverfahrens sind somit auf einfache, effiziente und intuitive Weise Verfahrbereichsbeschränkungen für die verfahrbare Komponente 1 vorgebbar.

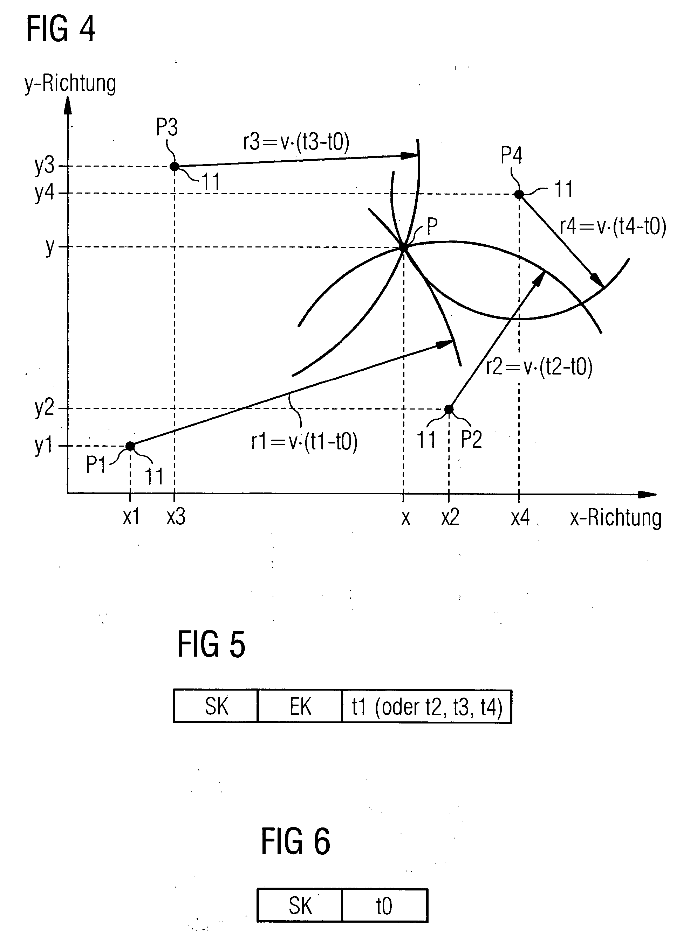

Nachfolgend wird in Verbindung mit FIG 4 für den zweidimensionalen Fall beispielhaft für eine konkrete Ausgestaltung eine mögliche Vorgehensweise zur Bestimmung der Position P des Zeigers 9 näher erläutert. Im Rahmen von FIG 4 wird angenommen, dass die erste Ortsbestimmungseinrichtung 10 als (einzelner) Sender ausgebildet ist, dass vier zweite Ortsbestimmungseinrichtungen 11 vorhanden sind und dass die zweiten Ortsbestimmungseinrichtungen 11 ausschließlich den jeweiligen Empfangszeitpunkt vermerken. Andere Ausgestaltungen, beispielsweise der dreidimensionale Fall oder dass direkt die Laufzeit ermittelt wird, dass die erste Ortsbestimmungseinrichtung 10 als reiner Reflektor ausgebildet ist oder dass mehrere erste Ortsbestimmungseinrichtungen 10 vorhanden sind, können in analoger Weise behandelt werden.

Die zweiten Ortsbestimmungseinrichtungen 11 sind an vorbestimmten Maschinenorten angeordnet, die in FIG 4 mit den Bezugszeichen P1 bis P4 bezeichnet sind und die Koordinaten x1, y1 bis x4, y4 aufweisen. Aufgrund des Umstands, dass in dem Beispiel von FIG 4 nur eine einzige erste Ortsbestimmungseinrichtung 10 vorhanden ist, kann weiterhin der Ort der ersten Ortsbestimmungseinrichtung 10 als mit dem Ursprung des Zeigerkoordinatensystems übereinstimmend angesehen werden.

Man nehme weiterhin an, die erste Ortsbestimmungseinrichtung 10 sendet zu einem - prinzipiell beliebigen - Sendezeitpunkt t0 ein pulsförmiges Sendesignal aus. Das Sendesignal wird in diesem Fall von den zweiten Ortsbestimmungseinrichtungen 11 zu jeweiligen Empfangszeitpunkten t1 bis t4 empfangen. Dann gelten für Abstände r1 bis r4 der zweiten Ortsbestimmungseinrichtungen 11 von der ersten Ortsbestimmungseinrichtung 10 die Beziehungen

$$r1^2 = (t1 - t0)^2 \cdot v^2 = (x - x1)^2 + (y - y1)^2 \qquad (1)$$

$$r2^2 = (t2 - t0)^2 \cdot v^2 = (x - x2)^2 + (y - y2)^2 \qquad (2)$$

$$r3^2 = (t3 - t0)^2 \cdot v^2 = (x - x3)^2 + (y - y3)^2 \qquad (3)$$

$$r4^2 = (t4 - t0)^2 \cdot v^2 = (x - x4)^2 + (y - y4)^2 \qquad (4).$$

x und y sind die gesuchten Koordinaten der Position P des Zeigers 9.

Es steht somit ein Gleichungssystem mit vier Gleichungen und drei Unbekannten (nämlich den Koordinaten x, y und dem Sendezeitpunkt t0) zur Verfügung. Sofern die zweiten Ortsbestimmungseinrichtungen 11 geeignet angeordnet sind, ist dieses Gleichungssystem lösbar, wobei die Lösung eindeutig ist. Die vierte Gleichung ist aufgrund der Nichtlinearität des Gleichungssystems erforderlich, um anderenfalls bestehende Zweideutigkeiten auflösen zu können.

Bei der obenstehend erläuterten Vorgehensweise wurde angenommen, dass nur die Empfänger (nicht aber die Sender) die von ihnen empfangenen Signale mit einem Zeitstempel versehen, d. h., dass sie den jeweiligen Empfangszeitpunkt t1 bis t4 registrieren und an die Steuereinrichtung 5 übermitteln. Das entsprechende allgemeine Datenformat (mehrere Sender - mehrere Empfänger) umfasst gemäß FIG 5 im einfachsten Fall eine Senderkennung SK, eine Empfängerkennung EK und den jeweiligen Empfangszeitpunkt t1 bis t4 des entsprechenden Empfängers. Die Senderkennung SK individualisiert den jeweiligen Sender, die Empfängerkennung den jeweiligen Empfänger.

Damit im Falle mehrerer Sender der Empfänger erkennen kann, von welchem Sender er ein Sendesignal empfängt, können beispielsweise die Sendesignale gemäß FIG 6 die jeweilige Senderkennung SK umfassen.

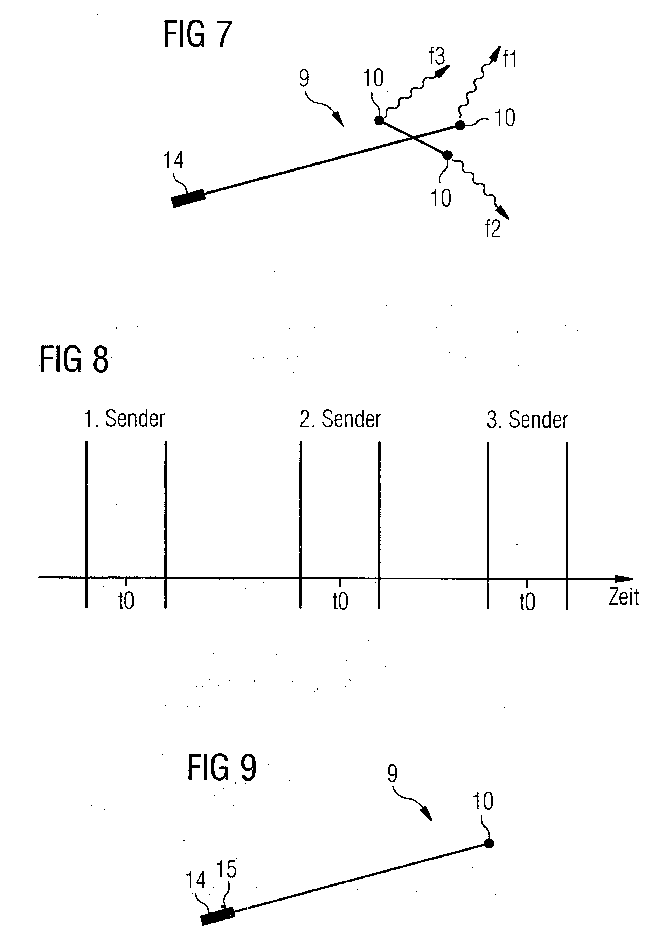

Alternativ oder zusätzlich ist es möglich, dass die Sender gemäß FIG 7 ihre Sendesignale auf verschiedenen Frequenzen f1, f2, ... abstrahlen. In diesem Fall ist - ggf. zusätzlich zur Senderkennung SK - anhand der jeweiligen Frequenz f1, f2, ... erkennbar, von welchem Sender das entsprechende Sendesignal stammt. Alternativ ist es möglich, dass den Sendern gemäß FIG 8 vorbestimmte Sendezeitbereiche (oder sogar jeweilige Sendezeitpunkte t0) zugeordnet sind, dass also jeder Sender nur zu bestimmten Zeiten sein Sendesignal aussendet. In diesem Fall kann in der Praxis ein von den Empfängern innerhalb eines bestimmten Zeitintervalls empfangenes Sendesignal nur von einem bestimmten Sender stammen.

In einer bevorzugten Ausgestaltung der vorliegenden Erfindung umfasst - unabhängig von der Anzahl an Sendern - das vom jeweiligen Sender ausgesendete Sendesignal ebenfalls einen Zeitstempel (in FIG 6 mit eingezeichnet). Der Zeitstempel gibt den Sendezeitpunkt t0 an. In diesem Fall können die Empfänger direkt aus der Differenz von jeweiligem Empfangszeitpunkt t1 bis t4 und jeweiligem Sendezeitpunkt t0 die Laufzeit des jeweiligen Signals ermitteln.

Die von den Sendern abgestrahlten Sendesignale können elektromagnetische Wellen sein. Vorzugsweise handelt es sich jedoch um akustische Signale, insbesondere um Ultraschallsignale. Aufgrund der erheblich geringeren Ausbreitungsgeschwindigkeit v von Schallwellen gegenüber elektromagnetischen Wellen ist in diesem Fall die Position P des Zeigers 9 mit erheblich geringerem Aufwand (insbesondere Synchronisationsaufwand der Sender und/oder Empfänger miteinander) mit hinreichender Genauigkeit ermittelbar.

Der Zeiger 9 kann vom Anwender 8 nicht beliebig schnell von Position P zu Position P bewegt werden. Der Anwender 8 muss daher in geeigneter Weise bekannt machen, wenn der Zeiger 9 die nächste zu erfassende Position P erreicht hat.

Es ist möglich, dass eine kontinuierliche Erfassung der charakteristischen Daten erfolgt und dass das Erreichen der nächsten zu erfassenden Position P angenommen wird, wenn der Zeiger 9 hinreichend lange (beispielsweise mehr als zwei oder drei Sekunden) nicht bewegt wird. Vorzugsweise erfolgt jedoch eine aktive Bestätigung des Anwenders 8. Beispielsweise kann entsprechend der Darstellung von FIG 9 der Zeiger 9 einen Griffbereich 14 aufweisen. Im Griffbereich 14 kann ein Auslöseelement 15 angeordnet sein, das vom Anwender 8 betätigbar ist. Das Auslöseelement 15 kann beispielsweise als entsprechende Taste ausgebildet sein.

Das Betätigen des Auslöseelements 15 hat die Wirkung, dass - zumindest im Ergebnis - das Ermitteln der Position P des Zeigers 9 ausgelöst wird. Beispielsweise kann das Betätigen des Auslöseelements 15 an die Sender und/oder die Empfänger übermittelt werden und deren Betrieb auslösen. Im Falle der Ausgestaltung der ersten oder zweiten Ortsbestimmungseinrichtungen 10, 11 als Transponder kann das Betätigen des Auslöseelements 15 beispielsweise das Aktivieren der Transponder auslösen. In allen diesen Fällen bewirkt das Betätigen des Auslöseelements 15 die Erfassung der charakteristischen Daten.

Alternativ oder zusätzlich kann das Betätigen des Auslöseelements 15 an die Empfänger übermittelt werden und dort die Übermittlung der erfassten charakteristischen Daten an die Steuereinrichtung 5 auslösen. Alternativ oder zusätzlich kann das Betätigen des Auslöseelements 15 an die Steuereinrichtung 5 übermittelt werden und dort die Ermittlung der Position P des Zeigers 9 auslösen, also sozusagen die - möglicherweise kontinuierlich - an die Steuereinrichtung 5 übermittelten charakteristischen Daten validieren.

Die Unterteilung des Arbeitsraums in dem zulässigen und den verbotenen Verfahrbereich - also der Schritt S16 von FIG 3 - kann auf verschiedene Art ausgestaltet werden. Beispielsweise kann mittels einer einzelnen vorgegebenen Position P der Verfahrbereich einer einzelnen Achse begrenzt werden. Ebenso ist es möglich, aus mehreren Punkten eine Ebene abzuleiten, welche eine flächige Begrenzung des Arbeitsraums darstellt. Weiterhin ist es möglich, eine Anzahl an Positionen zu selektieren, die als Eckpunkte eines zwei- oder dreidimensionalen Objekts angesehen

EP 2 594 373 B1

werden, das eine Störgeometrie darstellt, die umfahren werden muss. Einige dieser Möglichkeiten werden nachstehend näher erläutert.

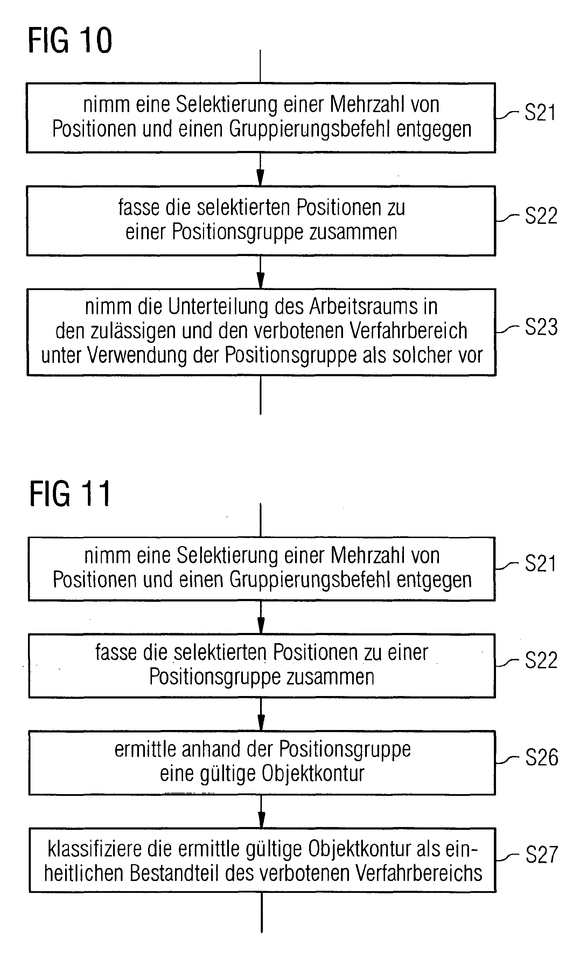

Beispielsweise kann der Anwender 8 gemäß FIG 10 in einem Schritt S21 eine Mehrzahl der zuvor ermittelten Positionen P des Zeigers 9 selektieren und der Steuereinrichtung 5 einen Gruppierungsbefehl vorgeben. Wenn dies der Fall ist, fasst die Steuereinrichtung 5 die selektierten Positionen P in einem Schritt S22 zu einer Positionsgruppe zusammen. In einem Schritt S23 nimmt die Steuereinrichtung 5 die Unterteilung des Arbeitsraums in den zulässigen und den verbotenen Verfahrbereich unter Verwendung der Positionsgruppe als solcher vor.

Beispielsweise kann der Anwender 8 im Schritt S21 zunächst drei Positionen P und sodann eine weitere Position P des Zeigers 9 selektieren. Die drei erstgenannten Positionen P definieren eine Ebene, welche den zulässigen vom verbotenen Verfahrbereich trennt. Die vierte Position P sollte außerhalb der durch die drei erstgenannten Positionen P definierten Ebene liegen, also entweder im zulässigen Verfahrbereich oder im verbotenen Verfahrbereich. Der Anwender 8 braucht in diesem Fall der Steuereinrichtung 5 nur noch vorgeben, ob die weitere Position P im zulässigen oder im verbotenen Verfahrbereich liegt.

Alternativ oder zusätzlich ist es möglich, den Schritt S23 gemäß FIG 11 durch Schritte S26 und S27 zu ersetzen. Im Schritt S26 ermittelt die Steuereinrichtung 5 anhand der Positionsgruppe eine gültige Objektkontur. Im Schritt S27 klassifiziert die Steuereinrichtung 5 die ermittelte gültige Objektkontur als einheitlichen Bestandteil des verbotenen Verfahrbereichs. Der Gruppierungsbefehl des Schrittes S21 ist in diesem Fall selbstverständlich ein anderer Befehl als wenn eine Ebene den zulässigen vom verbotenen Verfahrbereich trennen soll.

Zum Ermitteln der gültigen Objektkontur stehen verschiedene Möglichkeiten zur Verfügung. Beispielsweise kann die Steuereinrichtung 5 zwei- oder dreidimensional ein Polyeder (Vieleck) ermitteln, das alle Positionen P der entsprechenden Positionsgruppe enthält. Dieses Vieleck kann als gültige Objektstruktur angesehen werden.

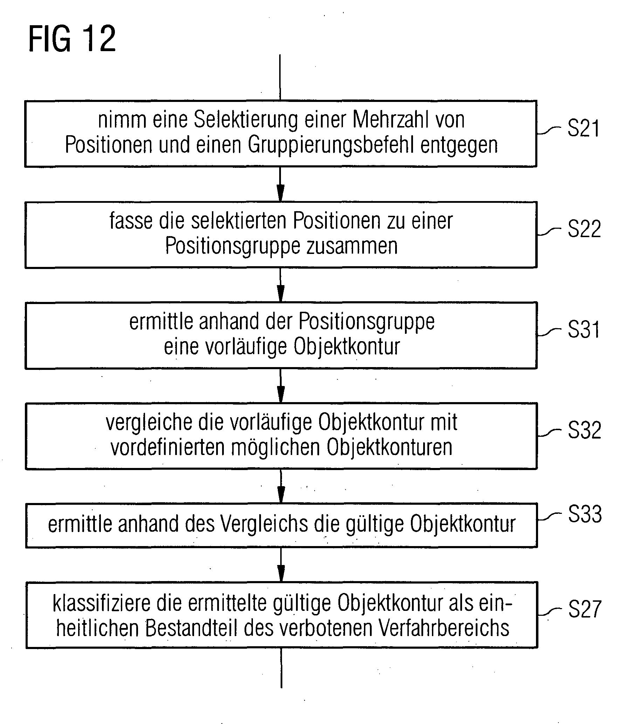

Alternativ kann entsprechend FIG 12 der Schritt S26 durch Schritte S31 bis S33 ersetzt sein. Im Schritt S31 ermittelt die Steuereinrichtung 5 - analog zum Schritt S26 von FIG 11 - eine Objektkontur. Diese Objektkontur entspricht jedoch noch nicht der gültigen Objektkontur, sondern nur einer vorläufigen Objektkontur. Im Schritt S32 vergleicht die Steuereinrichtung 5 die vorläufige Objektkontur des Schrittes S31 mit vordefinierten möglichen Objektkonturen. Die möglichen Objektkonturen können beispielsweise in einer Datenbank 16 hinterlegt sein, auf welche die Steuereinrichtung 5 Zugriff hat. Im Rahmen des Schrittes S32 kann die Steuereinrichtung 5 beispielsweise Ähnlichkeitsgrade der vorläufigen Objektkontur mit den möglichen Objektkonturen ermitteln. Im Schritt S33 ermittelt die Steuereinrichtung 5 die gültige Objektkontur anhand des Vergleichs des Schrittes S32. Beispielsweise kann im Schritt S33 eine der vordefinierten möglichen Objektkonturen als gültige Objektkontur bestimmt werden. Gegebenenfalls kann diese Bestimmung nur dann vorgenommen werden, wenn für diese mögliche Objektkontur ein Mindestähnlichkeitsgrad überschritten wird. Anderenfalls kann die vorläufige Objektkontur als gültige Objektkontur übernommen werden.

Die vorliegende Erfindung weist viele Vorteile auf. Insbesondere ist auf einfache und für den Anwender 8 intuitive Weise eine Unterteilung des prinzipiell möglichen Arbeitsraums in einen zulässigen und einen verbotenen Verfahrbereich möglich. Das erfindungsgemäße Vorgabeverfahren arbeitet zuverlässig, robust und ist schnell einsetzbar. Die Prozesssicherheit steigt in der Praxis erheblich. Die Handhabung des Zeigers 9 kommt der menschlichen Gestik entgegen. Sie ersetzt das umständliche numerische Eingeben von Zahlenkolonnen. Mittels einer grafikbasierten Darstellung des durch die Positionen P definierten Verfahrraums kann die Unterteilung vom Anwender 8 auf bequeme Weise validiert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Bearbeitungsmaschine,

   - wobei in einem Normalbetrieb eine Steuereinrichtung (5) der Bearbeitungsmaschine zum Bearbeiten eines Werkstücks (2) eine verfahrbare Komponente (1) der Bearbeitungsmaschine innerhalb eines für die verfahrbare Komponente (1) zulässigen Verfahrbereichs, nicht aber innerhalb eines für die verfahrbare Komponente (1) verbotenen Verfahrbereichs verfährt,
   - wobei der zulässige Verfahrbereich und der verbotene Verfahrbereich zueinander komplementär sind und zusammen einen Arbeitsraum bilden, innerhalb dessen die verfahrbare Komponente (1) verfahrbar ist, **dadurch gekennzeichnet, dass** ein Zeiger (9) eine Anzahl an ersten Ortsbestimmungseinrichtungen (10) aufweist, die bezüglich eines auf den Zeiger (9) bezogenen Zeigerkoordinatensystems an vorbestimmten Zeigerorten angeordnet sind, - eine Anzahl an zweiten Ortsbestimmungseinrichtungen (11) bezüglich eines auf die Bearbeitungsmaschine bezogenen Maschinenkoordinatensystems an vorbestimmten Maschinenorten (P1 bis P4) an-

9

geordnet ist, und dass in einem Vorgabebetrieb

-- ein Zeiger (9) von einem Anwender (8) nacheinander an eine Anzahl von Orten des Arbeitsraums der Bearbeitungsmaschine geführt wird,

-- durch Zusammenwirken der ersten Ortsbestimmungseinrichtungen (10) mit den zweiten Ortsbestimmungseinrichtungen (11) jeweils zumindest für eine geometrische Beziehung der ersten Ortsbestimmungseinrichtungen (10) relativ zu den zweiten Ortsbestimmungseinrichtungen (11) charakteristische Daten (t1 bis t4) erfasst und an die Steuereinrichtung (5) übermittelt werden,

-- die Steuereinrichtung (5) anhand der übermittelten charakteristischen Daten (t1 bis t4), der vorbestimmten Zeigerorte und der vorbestimmten Maschinenorte (P1 bis P4) jeweils die Position (P) des Zeigers (9) im Arbeitsraum ermittelt und

-- die Steuereinrichtung (5) die ermittelten Positionen (P) des Zeigers (9) im Rahmen einer Unterteilung des Arbeitsraums der Bearbeitungsmaschine in den zulässigen und den verbotenen Verfahrbereich berücksichtigt.

2. Betriebsverfahren nach Anspruch 1,
**dadurch gekennzeichnet,**
**dass** die charakteristischen Daten (t1 bis t4) jeweils für die Abstände (r1 bis r4) der ersten Ortsbestimmungseinrichtungen (10) von den zweiten Ortsbestimmungseinrichtungen (11) charakteristisch sind.

3. Betriebsverfahren nach Anspruch 1 oder 2,
**dadurch gekennzeichnet,**
**dass** die ersten oder die zweiten Ortsbestimmungseinrichtungen (10, 11) jeweils ein Signal aussenden, dass die jeweils anderen Ortsbestimmungseinrichtungen (11, 10) die ausgesendeten Signale empfangen und dass die jeweils anderen Ortsbestimmungseinrichtungen (11, 10) die charakteristischen Daten (t1 bis t4) an die Steuereinrichtung (5) übermitteln.

4. Betriebsverfahren nach Anspruch 1 oder 2,
**dadurch gekennzeichnet,**
**dass** die ersten oder die zweiten Ortsbestimmungseinrichtungen (10, 11) jeweils ein Signal aussenden, dass die jeweils anderen Ortsbestimmungseinrichtungen (11, 10) die ausgesendeten Signale reflektieren oder in modifizierter Form wieder emittieren, dass die ersten oder die zweiten Ortsbestimmungseinrichtungen (10, 11) die reflektierten oder in modifizierter Form wieder emittierten Signale empfangen und die charakteristischen Daten (t1 bis t4) an die Steuereinrichtung (5) übermitteln.

5. Betriebsverfahren nach Anspruch 3 oder 4,
**dadurch gekennzeichnet,**
**dass** zumindest die Empfänger die von ihnen empfangenen Signale mit einem Zeitstempel versehen.

6. Betriebsverfahren nach Anspruch 3, 4 oder 5,
**dadurch gekennzeichnet,**
**dass** mehrere Sender vorhanden sind und dass die Sendesignale eine den jeweiligen Sender individualisierende jeweilige Senderkennung (SK) umfassen und/oder die Sender ihre Sendesignale simultan auf verschiedenen Frequenzen (f1, f2, ...) oder im Zeitmultiplex abstrahlen.

7. Betriebsverfahren nach einem der Ansprüche 3 bis 7,
**dadurch gekennzeichnet,**
**dass** die charakteristischen Daten (t1 bis t4) von den Empfängern leitungslos an die Steuereinrichtung (5) übermittelt werden.

8. Betriebsverfahren nach einem der Ansprüche 3 bis 7,
**dadurch gekennzeichnet,**
**dass** die von den Sendern abgestrahlten Signale akustische Signale sind, insbesondere Ultraschallsignale sind.

9. Betriebsverfahren nach einem der obigen Ansprüche,
**dadurch gekennzeichnet,**
**dass** die Steuereinrichtung (5) anhand der übermittelten charakteristischen Daten (t1 bis t4), der vorbestimmten Zeigerorte und der vorbestimmten Maschinenorte (P1 bis P4) zusätzlich zur Position (P) des Zeigers (9) im Arbeitsraum auch die Orientierung des Zeigers (9) im Arbeitsraum ermittelt.

10. Betriebsverfahren nach einem der obigen Ansprüche,
**dadurch gekennzeichnet,**
**dass** der Zeiger (9) einen Griffbereich (14) aufweist und dass im Griffbereich (14) ein Auslöseelement (15) angeordnet ist, dessen Betätigung durch den Anwender (8) die Erfassung der charakteristischen Daten (t1 bis t4) und/oder die Übermittlung der charakteristischen Daten (t1 bis t4) an die Steuereinrichtung (5) und/oder die Ermittlung der Position (P) des Zeigers (9) im Arbeitsraum auslöst.

11. Betriebsverfahren nach einem der obigen Ansprüche,
**dadurch gekennzeichnet,**
**dass** ermittelte Positionen (P) des Zeigers (9) vom Anwender (8) selektierbar sind, dass der Steuereinrichtung (5) vom Anwender (8) ein Gruppierungsbefehl vorgebbar ist, dass die Steuereinrichtung (5) die selektierten Positionen (P) des Zeigers (9) aufgrund des Gruppierungsbefehls zu einer jeweiligen Positionsgruppe zusammenfasst und dass die Steuereinrichtung (5) die Unterteilung des Arbeitsraums in den zulässigen und den verbotenen Verfahrbereich unter Verwendung der Positionsgruppe als solcher vornimmt.

12. Betriebsverfahren nach Anspruch 11,
**dadurch gekennzeichnet,**
**dass** die Steuereinrichtung (5) anhand der jeweiligen Positionsgruppe eine gültige Objektkontur ermittelt und dass die Steuereinrichtung (5) die ermittelte gültige Objektkontur als einheitlichen Bestandteil des für die verfahrbare Komponente (1) verbotenen Verfahrbereichs klassifiziert.

13. Betriebsverfahren nach Anspruch 12,
**dadurch gekennzeichnet,**
**dass** die Steuereinrichtung (5) anhand der jeweiligen Positionsgruppe eine vorläufige Objektkontur ermittelt, dass die Steuereinrichtung (5) die vorläufige Objektkontur mit vordefinierten möglichen Objektkonturen vergleicht und dass die Steuereinrichtung (5) die gültige Objektkontur anhand des Vergleichs der vorläufigen Objektkontur mit den vordefinierten möglichen Objektkonturen ermittelt.

14. Computerprogramm, das Maschinencode (7) umfasst, der von einer Steuereinrichtung (5) einer Bearbeitungsmaschine unmittelbar abarbeitbar ist,

- wobei die Abarbeitung des Maschinencodes (7) durch die Steuereinrichtung (5) bewirkt, dass die Steuereinrichtung (5) in einem Normalbetrieb zum Bearbeiten eines Werkstücks (2) eine verfahrbare Komponente (1) der Bearbeitungsmaschine innerhalb eines für die verfahrbare Komponente (1) zulässigen Verfahrbereichs, nicht aber innerhalb eines für die verfahrbare Komponente (1) verbotenen Verfahrbereichs verfährt, wobei der zulässige Verfahrbereich und der verbotene Verfahrbereich zueinander komplementär sind und zusammen einen Arbeitsraum bilden, innerhalb dessen die verfahrbare Komponente (1) verfahrbar ist, **dadurch gekennzeichnet dass**
- die Abarbeitung des Maschinencodes (7) durch die Steuereinrichtung (5) weiterhin bewirkt, dass die Steuereinrichtung (5) in einem Vorgabebetrieb

-- für eine Anzahl von Orten des Arbeitsraums der Bearbeitungsmaschine, an die ein Zeiger (9) von einem Anwender (8) nacheinander geführt wird, jeweils eine Anzahl von durch Zusammenwirken einer Anzahl erster Ortsbestimmungseinrichtungen (10) mit einer Anzahl zweiter Ortsbestimmungseinrichtungen (11) erfasste, für eine geometrische Beziehung der ersten Ortsbestimmungseinrichtungen (10) relativ zu den zweiten Ortsbestimmungseinrichtungen (11) charakteristische Daten (t1 bis t4) entgegen nimmt, wobei die ersten Ortsbestimmungseinrichtungen bezüglich eines auf den Zeiger (9) bezogenen Zeigerkoordinatensystems an vorbestimmten Zeigerorten angeordnet sind und die zweiten Ortsbestimmungseinrichtungen (11) bezüglich eines auf die Bearbeitungsmaschine bezogenen Maschinenkoordinatensystems an vorbestimmten Maschinenorten (P1 bis P4) angeordnet sind,
-- anhand der entgegen genommenen charakteristischen Daten (t1 bis t4), der vorbestimmten Zeigerorte und der vorbestimmten Maschinenorte (P1 bis P4) jeweils die Position (P) des Zeigers (9) im Arbeitsraum ermittelt und
-- die ermittelten Positionen (P) des Zeigers (9) im Rahmen einer Unterteilung des Arbeitsraums der Bearbeitungsmaschine in den zulässigen und den verbotenen Verfahrbereich berücksichtigt.

**15.** Steuereinrichtung einer Bearbeitungsmaschine,
**dadurch gekennzeichnet,**
**dass** die Steuereinrichtung mit einem Computerprogramm (6) nach Anspruch 14 programmiert ist.

**Claims**

**1.** Operating method for a processing machine,

- wherein in a normal mode of operation a control device (5) of the processing machine for machining a workpiece (2) displaces a movable component (1) of the processing machine within a permitted traversing range for the movable component (1), but not within a prohibited traversing range for the movable component (1),
- wherein the permitted traversing range and the prohibited traversing range are complementary to one another and together form a working space within which the movable component (1) can be displaced, **characterised in that** a pointer (9) has a number of first location determining devices (10) which are arranged at predetermined pointer locations relative to a pointer coordinate system referred to the pointer (9),
- wherein a number of second location determining devices (11) are arranged at predetermined machine locations (P1 to P4) relative to a machine coordinate system referred to the processing machine, and that in a command mode of operation

-- a pointer (9) is guided by a user (8) in succession to a number of locations of the working space of the processing machine,
-- through interaction of the first location determining devices (10) with the second location determining devices (11), data (t1 to t4) characteristic at least of a geometric relationship of the first location determining devices (10) relative to the second location determining devices (11) is acquired in each case and transmitted to the control device (5),
-- the control device (5) determines the position (P) of the pointer (9) in the working space in each case on the basis of the transmitted characteristic data (t1 to t4), the predetermined pointer locations and the predetermined machine locations (P1 to P4), and
-- the control device (5) takes the determined positions (P) of the pointer (9) into account in the course of subdividing the working space of the processing machine into the permitted and the prohibited traversing range.

**2.** Operating method according to claim 1,
**characterised in that**
the characteristic data (t1 to t4) is characteristic in each case of the distances (r1 to r4) of the first location determining devices (10) from the second location determining devices (11).

**3.** Operating method according to claim 1 or 2,
**characterised in that**
each of the first or the second location determining devices (10, 11) emits a signal, **in that** the respective other location determining devices (11, 10) receive the emitted signals, and **in that** the respective other location determining devices (11, 10) transmit the characteristic data (t1 to t4) to the control device (5).

**4.** Operating method according to claim 1 or 2,
**characterised in that**
each of the first or the second location determining devices (10, 11) emits a signal, **in that** the respective other location determining devices (11, 10) reflect the emitted signals or re-emit them in modified form, **in that** the first or the second location determining devices (10, 11) receive the reflected signals or the signals re-emitted in modified form and transmit the characteristic data (t1 to t4) to the control device (5).

**5.** Operating method according to claim 3 or 4,
**characterised in that**
at least the receivers provide the signals received by them with a timestamp.

**6.** Operating method according to claim 3, 4 or 5,
**characterised in that**
a plurality of transmitters are present and **in that** the transmit signals include an identifier (SK) individualising the respective transmitter and/or the transmitters emit their transmit signals simultaneously on different frequencies (f1, f2, ...) or using time division multiplexing.

7. Operating method according to one of claim 3 to 7,
**characterised in that**
the characteristic data (t1 to t4) is transmitted wirelessly by the receivers to the control device (5).

8. Operating method according to one of claim 3 to 7,
**characterised in that**
the signals emitted by the transmitters are acoustic signals, in particular ultrasound signals.

9. Operating method according to one of the above claims,
**characterised in that**
in addition to determining the position (P) of the pointer (9) in the working space, the control device (5) also determines the orientation of the pointer (9) in the working space on the basis of the transmitted characteristic data (t1 to t4), the predetermined pointer locations and the predetermined machine locations (P1 to P4).

10. Operating method according to one of the above claims,
**characterised in that**
the pointer (9) has a handle section (14) and **in that** in the handle section (14) there is arranged a trigger element (15) whose actuation by the user (8) initiates the acquisition of the characteristic data (t1 to t4) and/or the transmission of the characteristic data (t1 to t4) to the control device (5) and/or the determination of the position (P) of the pointer (9) in the working space.

11. Operating method according to one of the above claims,
**characterised in that**
determined positions (P) of the pointer (9) can be selected by the user (8), **in that** a grouping command can be specified to the control device (5) by the user (8), **in that** the control device (5) combines the selected positions (P) of the pointer (9) into a respective position group on the basis of the grouping command, and **in that** the control device (5) performs the subdivision of the working space into the permitted and the prohibited traversing range using the position group as such.

12. Operating method according to claim 11,
**characterised in that**
the control device (5) determines a valid object contour on the basis of the respective position group and **in that** the control device (5) classifies the determined valid object contour as a uniform part of the prohibited traversing range for the movable component (1).

13. Operating method according to claim 12,
**characterised in that**
the control device (5) determines a provisional object contour on the basis of the respective position group, **in that** the control device (5) compares the provisional object contour with predefined possible object contours, and **in that** the control device (5) determines the valid object contour on the basis of the comparison of the provisional object contour with the predefined possible object contours.

14. Computer program comprising machine code (7) which can be processed directly by a control device (5) of a processing machine,

- wherein the processing of the machine code (7) by the control device (5) causes the control device (5), in a normal mode of operation for machining a workpiece (2), to displace a movable component (1) of the processing machine within a permitted traversing range for the movable component (1), but not within a prohibited traversing range for the movable component (1), the permitted traversing range and the prohibited traversing range being complementary to one another and together forming a working space within which the movable component (1) can be displaced, **characterised in that**
- the processing of the machine code (7) by the control device (5) additionally causes the control device (5), in a command mode of operation,

-- to accept in each case, for a number of locations of the working space of the processing machine to which a pointer (9) is guided in succession by a user (8), a quantity of data (t1 to t4), acquired through interaction of a number of first location determining devices (10) with a number of second location determining devices (11) and characteristic of a geometric relationship of the first location determining devices (10) relative to the second location determining devices (11), the first location determining devices being arranged at predetermined pointer locations relative to a pointer coordinate system referred to the pointer (9) and the second location determining devices (11) being arranged at predetermined machine locations (P1 to P4) relative to a machine coordinate system referred to the processing machine,

-- to determine the position (P) of the pointer (9) in the working space in each case on the basis of the accepted characteristic data (t1 to t4), the predetermined pointer locations and the predetermined machine locations (P1 to P4), and

-- to take into account the determined positions (P) of the pointer (9) in the course of a subdivision of the working space of the processing machine into the permitted and the prohibited traversing range.

**15.** Control device of a processing machine,
**characterised in that**
the control device is programmed by means of a computer program (6) according to claim 14.

## Revendications

**1.** Procédé pour faire fonctionner une machine d'usinage,

- dans lequel, en fonctionnement normal, un dispositif ( 5 ) de commande de la machine d'usinage déplace, pour l'usinage d'une pièce ( 2 ), un élément ( 1 ) déplaçable de la machine d'usinage, dans une plage de déplacement autorisée pour l'élément ( 1 ) déplaçable, mais non dans une plage de déplacement interdite à l'élément ( 1 ) déplaçable,

- dans lequel la plage de déplacement autorisée et la plage de déplacement interdite sont complémentaires l'une de l'autre et forment ensemble un espace de travail, dans lequel l'élément ( 1 ) déplaçable peut être déplacé, **caractérisé en ce qu'**un indicateur ( 9 ) a un certain nombre de dispositifs ( 10 ) de détermination d'emplacement, qui sont disposés en des emplacements d'indicateurs déterminés à l'avance, rapportés à un système de coordonnées se rapportant à l'indicateur ( 9 ),

- un certain nombre de deuxièmes dispositifs ( 11 ) de détermination d'emplacement étant disposés en des emplacements ( P1 à P4 ) de machine déterminés à l'avance, rapportés à un système de coordonnées se rapportant à la machine d'usinage et **en ce que**, dans un fonctionnement d'avance,

-- un indicateur ( 9 ) est guidé par un utilisateur ( 8 ), successivement sur un certain nombre d'emplacements de l'espace de travail de la machine d'usinage,

-- par coopération des premiers dispositifs ( 10 ) de détermination d'emplacement avec les deuxièmes dispositifs ( 11 ) de détermination d'emplacement, respectivement des données (t1 à t4) caractéristiques d'au moins une relation géométrique des premiers dispositifs ( 10 ) de détermination d'emplacement par rapport aux deuxièmes dispositifs ( 11 ) de détermination d'emplacement sont détectées et sont transmises au dispositif ( 5 ) de commande,

-- le dispositif ( 5 ) de commande détermine, au moyen des données ( t1 à t4 ) caractéristiques transmises, des emplacements déterminés à l'avance de l'indicateur et des emplacements ( P1 à P4 ) déterminés à l'avance de la machine, respectivement la position ( P ) de l'indicateur ( 9 ) dans l'espace de travail et

-- le dispositif ( 5 ) de commande prend en compte les positions ( P ) déterminées de l'indicateur ( 9 ), dans le cadre d'une subdivision de l'espace de travail de la machine d'usinage, en la plage de déplacement autorisée et en la plage de déplacement interdite.

**2.** Procédé suivant la revendication 1,
**caractérisé**
**en ce que** les données ( t1 à t4 ) caractéristiques sont caractéristiques respectivement des distances ( r1 à r4 ) des premiers dispositifs ( 10 ) de détermination d'emplacement aux deuxièmes dispositifs ( 11 ) de détermination d'emplacement.

**3.** Procédé suivant la revendication 1 ou 2,
**caractérisé**
**en ce que** les premiers ou les deuxièmes dispositifs ( 10, 11 ) de détermination d'emplacement émettent respectivement un signal, en ce que les autres dispositifs ( 11, 10 ) de détermination d'emplacement respectifs reçoivent les signaux émis et en ce que les autres dispositifs ( 11, 10 ) de détermination d'emplacement respectifs transmettent les données ( t1 à t4 ) caractéristiques aux dispositifs ( 5 ) de commande.

4. Procédé suivant la revendication 1 ou 2,
**caractérisé**
**en ce que** les premiers ou les deuxièmes dispositifs ( 10, 11 ) de détermination d'emplacement émettent respectivement un signal, en ce que les autres dispositifs ( 11, 10 ) de détermination d'emplacement respectifs réfléchissent les signaux émis ou les ré-émettent sous une forme modifiée, en ce que les premiers ou les deuxièmes dispositifs ( 10, 11 ) de détermination d'emplacement reçoivent les signaux réfléchis ou ré-émis sous une forme modifiée et transmettent les donnés ( t1 à t4 ) caractéristiques au dispositif ( 5 ) de commande.

5. Procédé suivant la revendication 3 ou 4,
**caractérisé**
**en ce qu'**au moins les récepteurs munissent les signaux qu'ils reçoivent d'un horodatage.

6. Procédé suivant la revendication 3, 4 ou 5,
**caractérisé**
**en ce qu'**il y a plusieurs émetteurs et en ce que les signaux émis comprennent une caractérisation ( SK ) respective de l'émetteur, individualisant l'émetteur respectif et/ou les émetteurs envoient leurs signaux d'émission simultanément sur des fréquences ( f1, f2, ... ) différentes ou en multiplexage dans le temps.

7. Procédé suivant l'une des revendications 3 à 7,
**caractérisé**
**en ce que** les données ( t1 à t4 ) caractéristiques sont transmises par les récepteurs sans fil au dispositif ( 5 ) de commande.

8. Procédé suivant l'une des revendications 3 à 7,
**caractérisé**
**en ce que** les signaux émis par les émetteurs sont des signaux acoustiques, notamment des signaux d'ultrason.

9. Procédé suivant l'une des revendications précédentes,
**caractérisé**
**en ce que** le dispositif ( 5 ) de commande détermine, à l'aide des données ( t1 à t4 ) caractéristiques transmises, des emplacements de l'indicateur déterminés à l'avance et des emplacements ( P1 à P4 ) de la machine déterminés à l'avance, en plus de la position ( P ) de l'indicateur ( 9 ) dans l'espace de travail, également l'orientation de l'indicateur ( 9 ) dans l'espace de travail.

10. Procédé suivant l'une des revendications précédentes,
**caractérisé**
**en ce que** l'indicateur ( 9 ) a une partie ( 14 ) de préhension et en ce que, dans la partie ( 14 ) de préhension, est disposé un élément ( 15 ) de déclenchement, dont l'actionnement par l'utilisateur ( 8 ) déclenche la détection des données ( t1 à t4 ) caractéristiques et/ou la transmission des données ( t1 à t4 ) caractéristiques au dispositif ( 5 ) de commande et/ou la détermination de la position ( P ) de l'indicateur ( 9 ) dans l'espace de travail.

11. Procédé suivant l'une des revendications précédentes,
**caractérisé**
**en ce que** des positions ( P ) déterminées de l'indicateur ( 9 ) peuvent être sélectionnées par l'utilisateur ( 8 ), en ce qu'il peut être prescrit au dispositif ( 5 ) de commande, par l'utilisateur ( 8 ), une instruction de regroupement, en ce que le dispositif ( 5 ) de commande rassemble les positions ( P ) sélectionnées de l'indicateur ( 9 ), sur la base de l'instruction de regroupement, en un groupe de positions respectives et en ce que le dispositif ( 5 ) de commande effectue la subdivision de l'espace de travail en la plage de déplacement admissible et en la plage de déplacement interdite, en utilisant le groupe de positions en tant que tel.

12. Procédé suivant la revendication 11,
**caractérisé**
**en ce que** le dispositif ( 5 ) de commande détermine un contour d'objet valable, à l'aide du groupe de positions respectif et en ce que le dispositif ( 5 ) de commande classe le contour d'objet valable, qui a été déterminé, comme un élément constitutif unitaire de la plage de déplacement interdite à l'élément ( 1 ) déplaçable.

13. Procédé suivant la revendication 12,
**caractérisé**
**en ce que** le dispositif ( 5 ) de commande détermine, à l'aide du groupe de positions respectif, un contour d'objet provisoire, en ce que le dispositif ( 5 ) de commande compare le contour d'objet provisoire à des contours d'objets possibles définis à l'avance et en ce que le dispositif ( 5 ) de commande détermine le contour d'objet valable, à l'aide de la comparaison du contour d'objet provisoire, au contour d'objet possible défini à l'avance.

14. Programme d'ordinateur qui comprend un code ( 7 ) de machine, qui peut se dérouler sous l'action d'un dispositif ( 5 ) de commande d'une machine d'usinage,

- dans lequel, le déroulement du code ( 7 ) de machine par le dispositif ( 5 ) de commande fait que le dispositif ( 5 ) de commande déplace, dans un fonctionnement normal pour l'usinage d'une pièce ( 2 ), un élément (1) indéplaçable de la machine d'usinage, dans une plage de déplacement autorisée pour l'élément ( 1 ) déplaçable, mais non dans une plage de déplacement interdite à l'élément ( 1 ) déplaçable, la plage de déplacement autorisée et la plage de déplacement interdite étant complémentaires l'une de l'autre et formant ensemble un espace de travail dans lequel l'élément ( 1 ) déplaçable peut être déplacé, **caractérisé en ce que**
- le déroulement du code ( 7 ) de machine par le dispositif ( 5 ) de commande fait en outre que le dispositif ( 5 ) de commande, dans un fonctionnement d'avance,

-- reçoit, pour un certain nombre d'emplacements de l'espace de travail de la machine d'usinage où un indicateur ( 9 ) est guidé successivement par un utilisateur ( 8 ), respectivement un certain nombre de données ( t1 à t4 ) déterminées par coopération d'un certain nombre de premiers dispositifs ( 10 ) de détermination d'emplacement avec un certain nombre de deuxièmes dispositifs ( 11 ) de détermination d'emplacement et caractéristiques d'une relation géométrique des premiers dispositifs ( 10 ) de détermination d'emplacement par rapport aux deuxièmes dispositifs ( 11 ) de détermination d'emplacement, les premiers dispositifs de détermination d'emplacement étant disposés, par rapport à un système de coordonnées se rapportant à l'indicateur ( 9 ), en des emplacements d'indicateurs déterminés à l'avance et les deuxièmes dispositifs ( 11 ) de détermination d'emplacement étant disposés, par rapport à un système de coordonnées se rapportant à la machine d'usinage, en des emplacements ( P1 à P4 ) de machine déterminés à l'avance,
-- au moyen des données ( t1 à t4 ) caractéristiques reçues, des emplacements d'indicateurs déterminés à l'avance et des emplacements ( P1 à P4 ) de machines déterminés à l'avance, respectivement la position ( P ) d'indicateur ( 9 ) est déterminée dans l'espace de travail et
-- les positions ( P ) déterminées de l'indicateur ( 9 ) sont prises en compte, dans le cadre d'une subdivision de l'espace de travail de la machine d'usinage, en la plage de déplacement autorisée et en la plage de déplacement interdite.

15. Dispositif de commande de machine d'usinage,
**caractérisé**
**en ce que** le dispositif de commande est programmé par un programme ( 6 ) d'ordinateur suivant la revendication 14.

FIG 1

# FIG 2

S1

normal? — → S5

Vorgabebetrieb —

+ (from normal?)

S2

verfahre Werkzeug innerhalb des Arbeitsraums; berücksichtige, dass Werkzeug nur im zulässigen Verfahrbereich verfahren werden darf

+ (from Vorgabebetrieb) → S6

führe Vorgabeverfahren aus

S7

andere Aufgaben

S3

Modus ändern? +

— (from Modus ändern?) → S4

stelle neuen Betriebsmodus ein

# FIG 3

```
┌─ ─ ─ ─ ─ ─ ─ ─ ─ ─ ─ ─ ─ ─ ─ ─ ─ ─ ─ ─ ─ ─ ─ ─ ┐
│            führe einen Zeiger an einen Ort des            │  S11
│         Arbeitsraums der Bearbeitungsmaschine             │
└─ ─ ─ ─ ─ ─ ─ ─ ─ ─ ─ ─ ─ ─ ─ ─ ─ ─ ─ ─ ─ ─ ─ ─ ┘
```

nimm für eine geometrische Beziehung der ersten
Ortsbestimmungseinrichtungen relativ zu den zweiten
Ortsbestimmungseinrichtungen charakteristische Daten entgegen — S12

ermittle anhand der übermittelten charakteristischen Daten,
der Zeigerorte und der Maschinenorte die Position
(und ggf. auch Orientierung) des Zeigers im Arbeitsraum — S13

speichere die ermittelte Position
(und ggf. auch Orientierung) des Zeigers ab — S14

S15 — beenden?

+

unterteile den Arbeitsraum der Bearbeitungsmaschine in einen
zulässigen und einen verbotenen Verfahrbereich; berücksichtige
im Rahmen der Unterteilung die ermittelten Positionen des Zeigers — S16

## FIG 4

## FIG 5

| SK | EK | t1 (oder t2, t3, t4) |
|----|----|----------------------|

## FIG 6

| SK | t0 |
|----|----|

## FIG 7

9

10

f3

f1

14

10

10

f2

## FIG 8

1. Sender      2. Sender      3. Sender

$t0$      $t0$      $t0$      Zeit

## FIG 9

9

10

14 15

## FIG 10

| nimm eine Selektierung einer Mehrzahl von Positionen und einen Gruppierungsbefehl entgegen | S21 |

↓

| fasse die selektierten Positionen zu einer Positionsgruppe zusammen | S22 |

↓

| nimm die Unterteilung des Arbeitsraums in den zulässigen und den verbotenen Verfahrbereich unter Verwendung der Positionsgruppe als solcher vor | S23 |

## FIG 11

| nimm eine Selektierung einer Mehrzahl von Positionen und einen Gruppierungsbefehl entgegen | S21 |

↓

| fasse die selektierten Positionen zu einer Positionsgruppe zusammen | S22 |

↓

| ermittle anhand der Positionsgruppe eine gültige Objektkontur | S26 |

↓

| klassifiziere die ermittle gültige Objektkontur als einheitlichen Bestandteil des verbotenen Verfahrbereichs | S27 |

# FIG 12

| nimm eine Selektierung einer Mehrzahl von Positionen und einen Gruppierungsbefehl entgegen | S21 |

↓

| fasse die selektierten Positionen zu einer Positionsgruppe zusammen | S22 |

↓

| ermittle anhand der Positionsgruppe eine vorläufige Objektkontur | S31 |

↓

| vergleiche die vorläufige Objektkontur mit vordefinierten möglichen Objektkonturen | S32 |

↓

| ermittle anhand des Vergleichs die gültige Objektkontur | S33 |

↓

| klassifiziere die ermittelte gültige Objektkontur als einheitlichen Bestandteil des verbotenen Verfahrbereichs | S27 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090143912 A1
- GB 2285550 A